Europäisches Patentamt

European Patent Office

Office européen des brevets

(11) Publication number: **0 191 878**
**B1**

# EUROPEAN PATENT SPECIFICATION

(45) Date of publication of patent specification: **27.09.89**

(51) Int. Cl.⁴: **G 01 B 5/00,** G 01 B 5/20

(21) Application number: **85101771.5**

(22) Date of filing: **18.02.85**

(54) **Apparatus for dimensional inspection of a pipe spool, or for marking or cutting and finishing at its both ends.**

(43) Date of publication of application:
**27.08.86 Bulletin 86/35**

(45) Publication of the grant of the patent:
**27.09.89 Bulletin 89/39**

(84) Designated Contracting States:
**BE DE FR GB IT NL**

(56) References cited:
**GB-A-1 505 258**
**US-A-2 713 725**
**US-A-4 333 240**

(73) Proprietor: **DAI-ICHI HIGH FREQUENCY CO., LTD**
**13-10, Tsukiji 1-chome Chuo-ku**
**Tokyo (JP)**

(72) Inventor: **Kawanami, Shumpei**
**45-4 Shindo Hiratsuka-shi**
**Kanagawa-ken (JP)**
Inventor: **Nakama, Hiroshi**
**6-4-202 Sakonyama-Danchi Asahi-ku**
**Yokohama-shi Kanagawa-ken (JP)**

(74) Representative: **Lorenz, Eduard et al**
**Rechtsanwälte Eduard Lorenz - Bernhard Seidler**
**Margrit Seidler - Dipl.-Ing. Hans-K. Gossel Dr. Ina**
**Philipps - Dr. Paul B. Schäuble Dr. Siegfried**
**Jackermeier**
**Widenmayerstrasse 23 D-8000 München 22 (DE)**

## Description

This invention is related to an apparatus used for dimensional inspections of miscellaneous formed pipes, especially of a three dimensional bent pipe, and further for marking or cutting and finishing of its both ends.

Generally speaking, there are several methods to inspect a formed pipe, whichever it may be two dimensional or three dimensional bent.

One is a method where every contour, profile and shape of a formed pipe is subjected throughout its length by gage elements, and its tangents are inspected one by one. Such a method is known from US—A—2713723, in which a pair of end-of-part gage elements to cooperatively receive the respective opposite ends of a formed pipe, and a series of variably positioned intermediate gage elements which are of such shape and are so arranged as to receive portions of the formed pipe throughout its length, in such a manner and at a critical point as to particulary define a predetermined contour, profil and shape, and at the time gaging the object as to its overall length are applied.

Another method is a method where only a length between each center of both ends and gradients of both end tangents are inspected, and may be called diagonal system. This invention has been developed not only for measuring of a three dimensional bent pipe, but also for marking or cutting and finishing of its both ends quickly, therefore diagonal system is adopted for this invention.

In this invention a formed pipe to be handled is denoted P, while an end tangent to be laid horizontal is denoted horizontal pipe end P1 or shortly P1, and the other pipe end is denoted the second pipe end P2 or shortly P2. The basic features of the apparatus of this invention are as defined in claim 1. It consists of a base frame which is long enough to cover the diagonal length of the formed pipe, on which a horizontal base plane equipped with two turn tables turnable about axes vertical to said horizontal base plane, said first turn table being mounted on a slide table adjustable relative to the other second turn table, a horizontal pipe end support mounted on the first turn table having its axis intersects the vertical axis of said first turn table at a particular height and furthermore the other second pipe end support mounted on a swing table which may be turnable about an axis which is supported on the other second turn table so as to let the three axes that are axis of the second pipe end support, axis of the swing table and axis of the second turn table, intersect at the same height as that of the horizontal pipe end support.

As stated before a reason why one end of the formed pipe is to be supported horizontal is that it is the most convenient way to inspect and measure the formed pipe. The horizontal pipe end support is so formed that said pipe end P1 should be very easily loaded and unloaded by only lifting or lowering the formed pipe with a crane or hands.

Fig. 1 is a perspective view of basic construction of the apparatus of this invention on which a formed pipe has been mounted to be inspected.

Fig. 2 is an axial view of another example of a horizontal pipe end support and Fig. 3 is a side view of it.

Fig. 4, Fig. 5, Fig. 6 and Fig. 7 are examples of the second pipe end support equipped on a swing table.

Fig. 8 is an example of a horizontal pipe end support combined with subsidiary supports.

Fig. 9 is an example of combination of a horizontal pipe end support and a pipe end cutting and finishing unit.

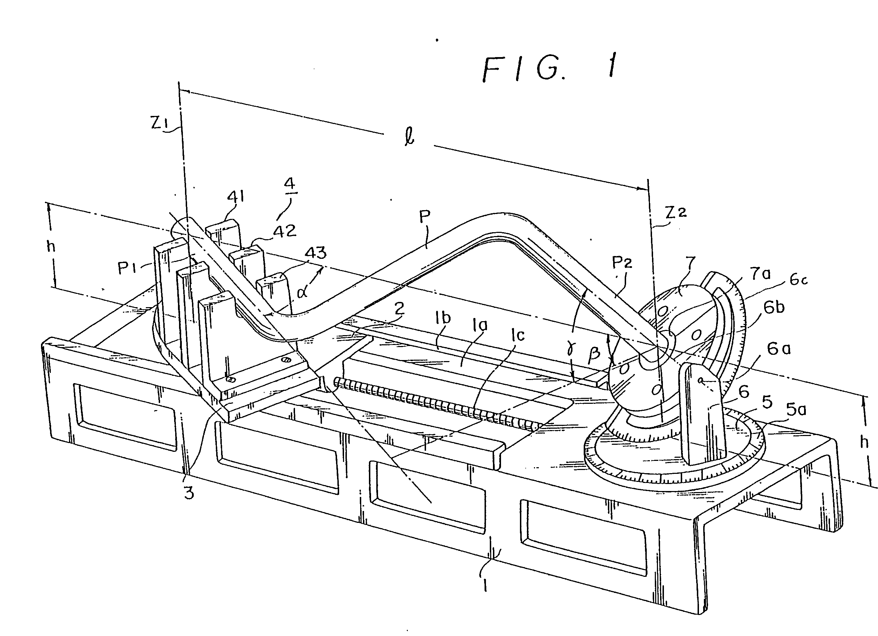

In Fig. 1, 1 is a base frame on which horizontal base plane 1a exists, 2 is a slide table which can move freely or forcedly along longitudinal direction of horizontal base plane 1a and it is guided with guide way 1b fixed on base frame 1. In this case slide table 2 is moved forcedly by rotating screw 1c and locked only by stopping the rotation at any location desired, but screw 1c may be changed with a rack gear or any other proper device. 3 is the first turn table turnable about vertical axis Z1 which is equipped on slide table 2 so composed as to turn freely or may be locked about axis Z1 perpendicular to said horizontal base plane 1a. 4 is a horizontal pipe end support which consists of supporting plates 41, 42, 43 equipped vertically on the first turn table 3, and may be called support 4. At the center of each supporting plate (41—43) there is an opening formed U in order to receive pipe end P1 easily and the center of each lower half circle is located so as to be in the same line as the line of pipe end P1 and intersects axis Z1 at a proper height h, and this line is regarded as the axis of support 4 and pipe end P1. Diameter of said lower half of the opening formed U is taken a little bit larger than the outside diameter of P1 with a proper clearance which is large enough to meet certain error in fabrication of the formed pipe, and with which the formed pipe is received and supported easily even when the axis of support 4 is adjusted previously at an angle determined by calculation as mentioned later.

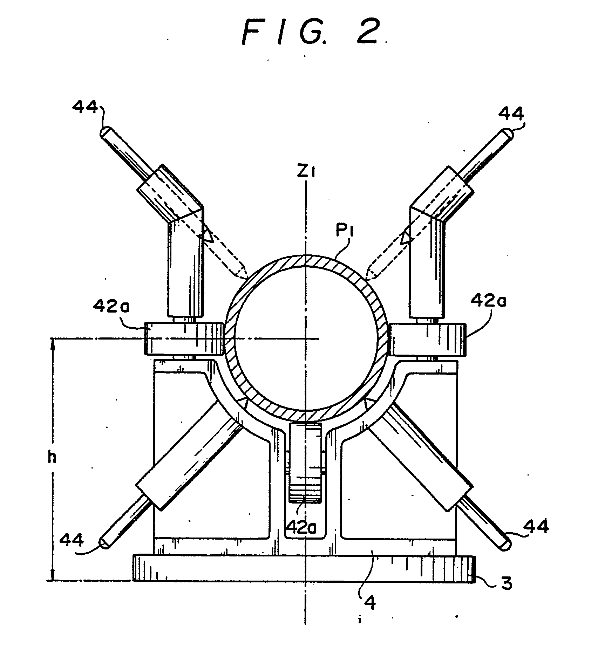

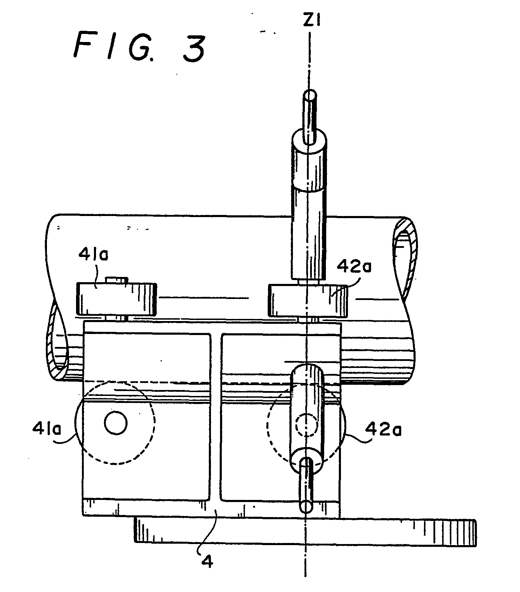

In Fig. 1 supporting plates 41, 42, 43 must be changeable or adjustable in order to fit different size of formed pipes. Plate 43 located at inner side of axis Z1 may be omitted or may be composed displaceable if necessary. At any rate, supporting plates 41, 42, 43 which may be called nail pieces equipped in support 4 must be so fabricated that their axis should be horizontal and intersect Z1 at height h. In this invention any other construction of support 4 is available, and for example two or three sets of supporting rollers may be applicable in place of supporting plates or nail pieces 41, 42 or 43 as shown in Fig. 2 and Fig. 3.

In Fig. 2 and Fig. 3, support 4 is mounted on the first turn table 3, of which turning axis is axis Z1. In this case three rollers 41a and 42b are adopted in place of supporting plates 41 and 42 in Fig. 1. Each roller can be changed with various rollers so as to fit outside diameters of various sizes of formed pipes, and to have its center axis horizontal and besides intersect axis Z1 at height h. For the purpose of marking, a number of center punches 44 (in this case four punches) are so installed that each axis of them is in a plane which includes axis Z1 and is perpendicular to axis of support 4 and this plane is called the first intersecting plane. Normally larger distance between roller 41a to roller 42a, is preferable to get more correct result of measurement of turning angle of support 4. Turning angle of support 4 is indicated with a scale installed on table 3 or on slide table 2, and the result is compared with the value which is calculated with a computer by analytical geometry or vector analysis in space which may be called space analysis altogether. Tilting of P1 about the axis of support 4 may be measured for example with a level gauge or calculated from clearance between P1 and rollers 41a, 42a. As shown in Fig. 2 upper two punches must be pulled up to the right and left so largely enough that P1 is easily loaded and unloaded on support 4, without touching to said punches.

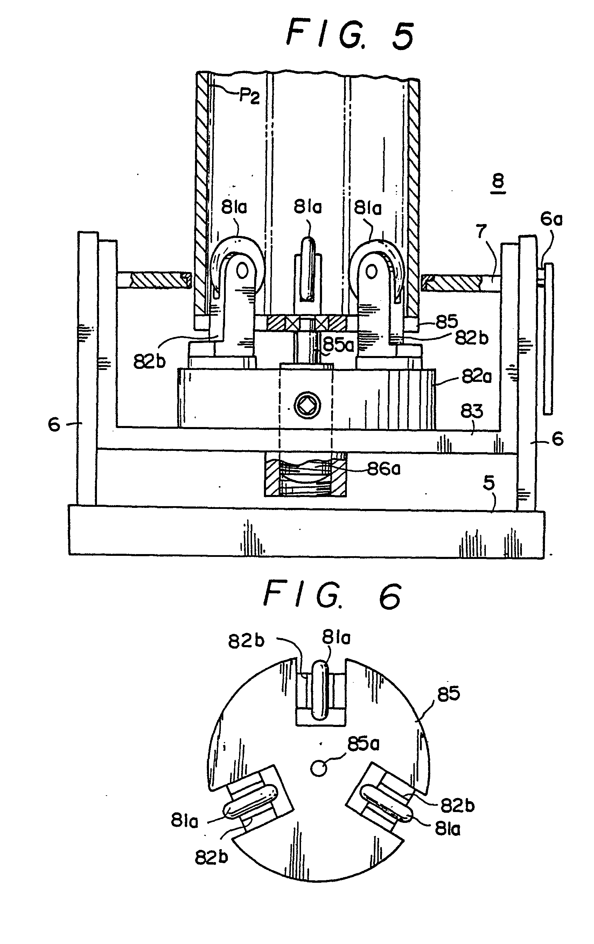

Again in Fig. 1, 5 is the second turn table equipped on the other end of base frame 1 which is turnable about an vertical axis Z2 parallel to axis Z1, 6 is a couple of brackets equipped vertically at the circumference of turn table 5, on the top of which pivots 6a are so equipped as to have their center axis 6b be parallel to turn table 5 which is parallel to horizontal base plane 1a, and to intersect axis Z2 at height h. Swing table 7 is so equipped as to be rotatable about swing axis 6b and may be locked at any desired swing angle. 5a and 6c is a scale to read turning angles of turn table 5 and swing table 7 respectively. At the center of swing table 7 opening 7a which is larger enough that the outside diameter of the largest formed pipe to be handled is formed. In order to support pipe end P2 the second pipe end support 8 is installed on the back surface of swing table 7 in this case. The second pipe end support 8 for P2 may be called shortly support 8. As support 8 is mounted on swing table 7, just likely as an universal joint, its axis may be variable to any direction freely to meet direction of pipe end P2 installed. Detail construction of support 8 would be explained later, and here geometric relations between important parts may be explained. Support 8 is installed on swing table 7 so as to have its center axis, which should also be center axis of pipe end P2, intersect axis Z2 and swing axis 6b. A plane that includes the point of intersection of these three axes and is perpendicular to center axis of swing table 7 is called the second intersecting plane, at which marking or cutting is operated.

For geometric calculation or vector analysis a plane parallel to horizontal base plane and at height h from it is taken as XY-plane of Cartesian coordinate system. It is convenient to take a point on plane-XY at which axis Z1 intersects it as the origin and to take horizontal axis of P1 as the axis-X of this coordinate system. Referring to drawings or data sheets for the formed pipe distance l measures from origin at axis Z1 to axis S2, angle

α from axis of P1 to line l, angle β from a line of projection of axis of P2 onto plane-XY to line l, and angle γ from axis of P2 to XY-plane are calculated. On the other hand practically length l is measured as a distance between center of turn table 3 and turn table 5 and at the same time, angle α, β and γ is measured as a rotating angle of each turn table 3, 5 and swing table 7.

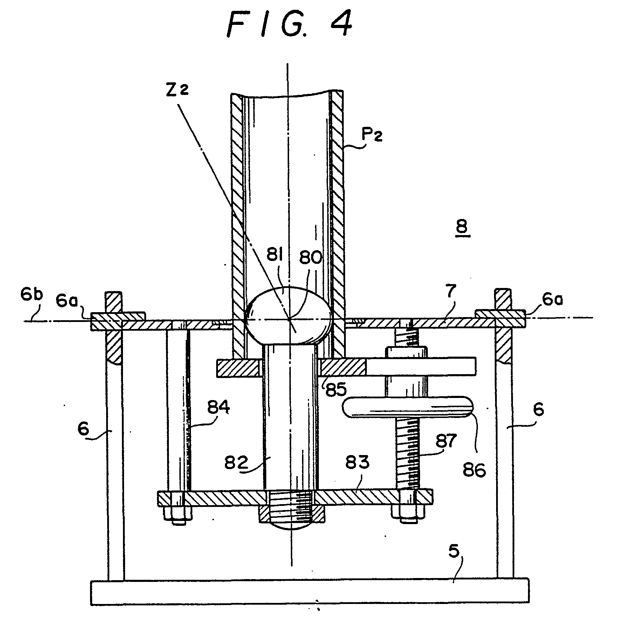

For support 8 two functions are required one of which is to support pipe end P2 having axis of P2 always intersect the both axes Z2 and 6a at a point event if direction of P2 tilts slightly, and the other function is to allow pipe end P2 move along its axis to and fro with a certain little range in order to set the formed pipe at an optimum location where length 1, angle α, β and γ indicates a correct value within a certain tolerance. Therefore support 8 consists of two kinds of mechanism corresponding to these two kinds of said function respectively. To meet these requirements several constructions of support 8 shown in Fig. 4, 5, 6 and 7 are available.

Fig. 4 is an example which may be one of the most simple constructions. At this figure intersection point of three axes Z2, 6a and axis of P2 is shown as center 80 of spherical mandrel 81 which is supported with a stem 82 equipped vertical to and concentric with swing table 7 by means of plate 83 and a number of rods 84. Diameter of spherical mandrel 81 is taken nearly equal to inside diameter of P2. This type of support 8 is simple but sphere 81 must be changed for different pipe sizes. Of course it may be clear that axis of P2 intersects the point of said intersection of axis Z2 and 6a substantially, even if it is tilted a little.

Position of P2 is adjusted and tightened with magnet chuck 85 which attract the end of P2 strongly enough to slide P2 longitudinally. Chuck 85 is moved vertically with a handle 86 and screw 87 by rotating. Reason why a magnet chuck is preferred is that its attracting force is strong enough to move a pipe end longitudinally against certain resistance and moreover a slight slip caused by a little tilting of the pipe end is allowable due to the property of the magnet chuck. But any other mechanical chuck equivalent to above magnet chuck may be of course available.

Swing table 7 can be inclined freely or forcedly about axis 6b supported with a pair of brackets 6 mounted on turn table 5.

Fig. 5 is improvement of Fig. 4, wherein spherical mandrel 81 is replaced with three rollers 81a, each of which is equipped on each radial slide piece of scroll chuck 82a with bracket 82b and therefore it can fit a large pipe at the inside and fit a small pipe at the outside without change of any part. Axis of every roller is of course included in the second intersecting plane.

Magnet chuck 85 is equipped at the top of spindle 85a which is held adjustable by means of screw jack or hydraulic cylinder 86a. And loose connection of chuck 85 to spindle 85a is more preferable in order to meet slight tilting of P2.

Purpose to use spherical mandrel 81 or roller 81a is to allow easy tilting of axis of P2 within a small angle 1 or 2 degrees about vertical axis of swing table 7 which direction is tightened previously at a calculated position. It is much harder to tilt swing table 7 and to rotate turn table 5 than to tilt magnet chuck 85 freely because of its weight and unbalance. Such tilting is required to meet minute but inevitable error caused by fabrication of the formed pipe and required for inevitable tilting of pipe end P2 when P2 is moved axially through support 8 in order to set the formed pipe at an optimum position mentioned before.

Fig. 6 is a view of a part of Fig. 5 as seen from the top of it.

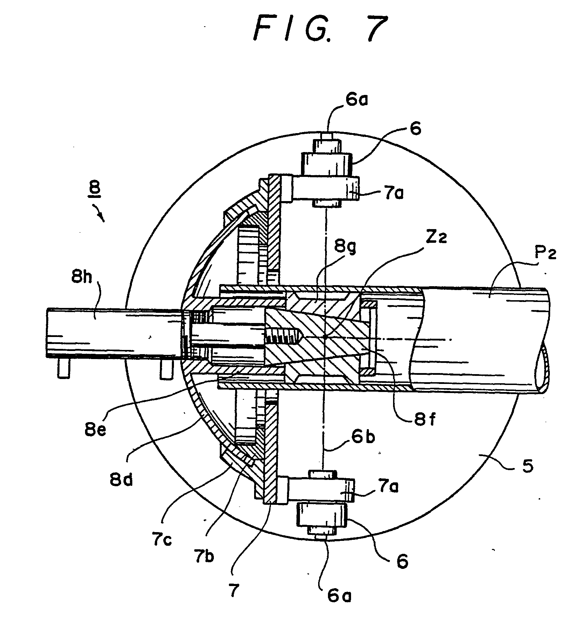

Fig. 7 is another example of support 8 for pipe end P2 seen from the top of axis Z2 of turn table 5, which mechanism can be applied also to support 4.

As mentioned before brackets 6 are equipped on turn table 5, and swing table 7 is secured by brackets 6 with pivots 6a and brackets 7a. On the back side of swing table 7, ring pieces 7b and ring frame 7c are fixed to bear spherical main frame 8d smoothly between spherical surfaces formed on them in order to allow easy tilting of support 8 within a small angle 1 or 2 degrees. Support 8 consists of 8d, 8e, 8f and 8h, where 8d is a guide sleeve fixed on main frame 8d to guide slidable mandrel 8f, and 8g is one of expand pieces to support pipe end P2 coaxially with slidable mandrel 8f, guide sleeve 8e and also main frame 8d. Expand pieces 8g are expanded with the slope of slidable mandrel 8f which is pushed with hydraulic cylinder 8h. Force of hydraulic cylinder 8h is so large enough as to improve circularity of P2 in order to get perfect or satisfactory bevel end finishing. Besides, main frame 8d is so equipped on swing table 7 as to keep the center of sphere surface of main frame 8d be secured at the point of intersection of swing axis 6b and axis Z2 in spite of tilting of P2.

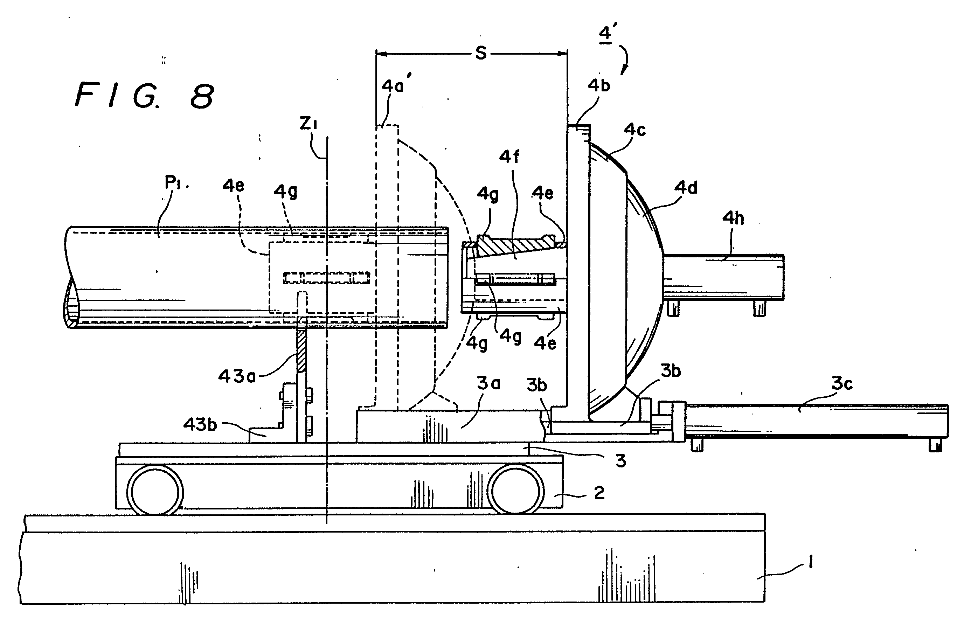

Fig. 8 is a side view of another horizontal pipe end support 4' combined with subsidiary support 43a equipped face to face with support 4' on turn table 3 with bracket 43b. Support 43a is similar to plate 43 mentioned before. Subsidiary support 43a is used to support pipe end P1 temporarily before support 4' is applied to it. Support 4' consists of 4d, 4e, 4f, 4g and 4h which is similar to 8d, 83, 8f, 8g and 8h in Fig. 7 respectively. Spherical main frame 4d is supported and guided with ring frame 4c which inside surface, and is secured on slide body 4b which is guided with guide 3a along groove 3b. Slide body 4b is connected with a piston rod of hydraulic cylinder 3c fixed at the end of guide 3a which is fixed on turn table 3. Support 43a and support 4' are equipped coaxial. The common axis is of course horizontal at height h and is rotatable about axis Z1.

Support 4' and subsidiary support 43a mentioned here are used as follows:

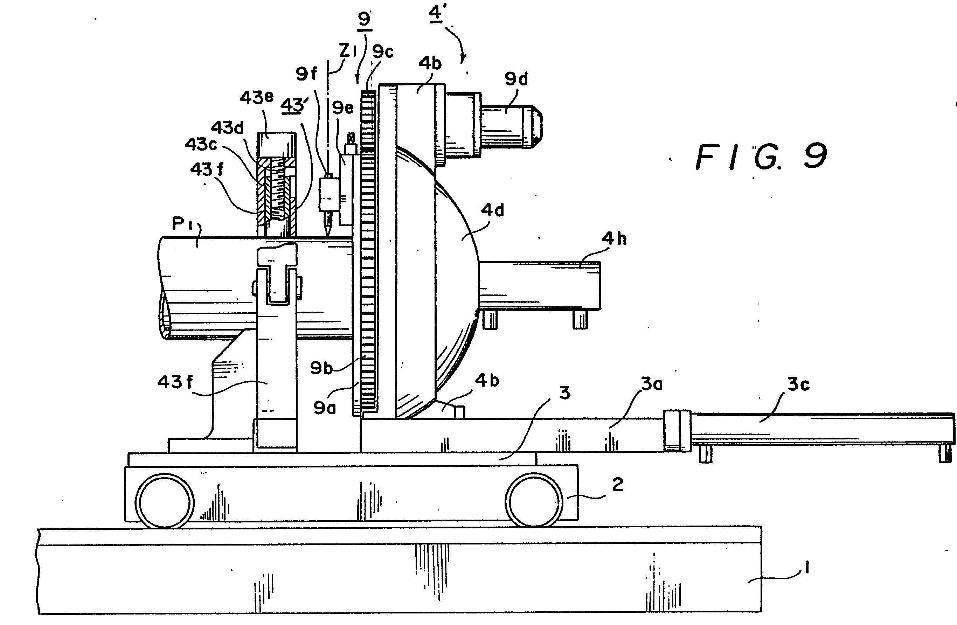

Before pipe end P1 is supported with support 4' (with 4d, 4e, 4f, 4g and 4h), P1 is put temporarily into subsidiary support 43a which function is similar to plate 43 in Fig. 1. At first, support 4' is previously shifted to the right as shown in Fig. 8, therefore P1 is easily put into the U shaped opening of subsidiary support 43a, after then support 4' is shifted to the left until the center of sphere of main frame 4d coincides axis Z1 by stroke S. Of course at this moment, slide table 2 is locked to base frame 1 temporarily. Expand pieces 4g must have been shrunk a little by pulling slidable mandrel 4f back to the right with cylinder 4h so as to be inserted easily into pipe end P1. Before expand pieces 4g are expanded, location of P1 should be adjusted to and fro by means of adjusting location of P2 on support 8 as mentioned before. After location of P2 and therefore P1 is adjusted optimum, expand pieces 4g are expanded by pushing slidable mandrel 4f into guide sleeve 4e with cylinder 4h, and then P1 is locked tightly. After expand pieces 4g are expanded, tilting of support 4' is checked by means of proper way. Allowable limit of tilting of pipe end P1 or P2 is considered between 1/2 and 1 degree. An example of method to measure angle of such tilting is shown in Fig. 9 as combination with a marking or cutting and finishing unit.

Fig. 9 shows an example in which a marking or cutting and finishing unit is combined with support 4' similar to that which is shown in Fig. 8. In Fig. 9 and Fig. 8 each same notation indicates the same part, and a turning unit for marking or cutting and finishing unit is indicated with notation 9 with suffix of a to f.

Subsidiary support 43' is improved so as to support P1 enough strongly in order to prevent keen vibration caused by cutting or finishing. 9a is a turning table for marking or cutting and finishing which is rotated with gear 9b and pinion 9c driven with geared motor 9d mounted on slide body 4b. Each function of 4b, 4d, 4h, 3, 3a, 3c, 2 and 1 is the same just as it is in the previous cases. On turnning table 9a slide head 9e is equipped to be slidable in a radial direction manually or automatically, on which a marking tool or cutting and finishing tool is mounted. Above mechanism shown in Fig. 9 may be applied also to support 8.

Improvment of subsidiary support 43' is as follows:

Subsidiary support 43' is equipped with sliding nails 43c which are driven with screws 43d turned with hydraulic motors or air motors 43e mounted on holder 43f, which holds sliding nails 43c. Moreover subsidiary support 43' must be adjustable in order to fit outside surface of tilted pipe end P1.

Further, in order to meet the case in which the cutting and finishing unit is combined with support 4', holder 43f must be split into upper and lower two parts so as to make the upper part be opened when the pipe end P1 is put down upon the lower part of subsidiary support 43', which is adjusted manually to hold pipe end P1 nearly coaxial with support 4'. After pipe end P1 is put on said lower part of subsidiary support 43' upper part of holder 43f is closed and connected with the lower part so as to support P1 tightly with screw 43d rotated by hydraulic or air motor 43e.

As will be fully understood from the foregoing description, the invention realizes an apparatus for dimensional inspection of a formed pipe, especially of a three dimensional bent pipe, and further for marking or cutting and finishing of the both ends. Accordingly, the invention is useful for production of formed pipes.

**Claims**

1. Apparatus for dimensional inspection of a formed pipe for marking, or cutting and finishing of both ends (P1, P2) of said pipe, said apparatus comprising a base frame which is long enough to cover the diagonal length of the pipe to be inspected, on which a horizontal or substantially horizontal base plane as the reference for a coordinate system exists, equipped with a horizontal pipe end support (4) and a second pipe end support (8), characterized by the first turntable (3) and second turntable (5), turnable about axes vertical to the plane of said base frame (1), said first turntable (3) being mounted on a slide table (2), movable along horizontal base plane (1a) of base frame (1) relative to said second turntable (5), said horizontal pipe end support (4) being mounted on said first turntable (3) so that its horizontal axis intersects the vertical axis of said turntable (3) at a particular height (h), and said second pipe end support (8) being mounted on a swing table (7) which may be rotated around an axis which is supported and fixed on said second turntable (5) in such a position that the three axes, i.e. the axis of second pipe end support (8), the axis of swing table (7) and the axis of second turntable (5), intersect at the same height (h) as that of said horizontal pipe end support (4).

2. Apparatus claimed in claim 1 characterized in that horizontal pipe end support (4) is constructed so as to keep its axis horizontal and at a proper height (h) and position in spite of changing or adjusting its supporting plates (41—43) or rollers (41a, 42a) corresponding to outside diameter of the formed pipe to be inspected.

3. Apparatus as claimed in Claim 1 or Claim 2 characterized in that the upperside of horizontal pipe end support (4) is formed open or adjustable to be opened and closed so that horizontal pipe end (P1) can be inserted and removed easily.

4. Apparatus as claimed in Claim 1 characterized in that the second pipe end support (8) is constructed so as to allow small additional tilting of pipe end (P2) against swing table (7) while having three axes that are axis of pipe end (P2), swing axis (6b) of swing table (7) and vertical axis of turntable (5) intersect each other at a point of proper height (h) of horizontal pipe end support (4) and allow small movement of pipe end (P2) through pipe end support (8) at optimum position.

5. Apparatus claimed in Claim 1 characterized in that a pipe end (P1) or (P2) is supported with a number of expandable pieces (8g) pushed to be expanded with a slidable mandrel (8f) slidable through guide sleeve (8e) which is fixed coaxially with a pipe end (P1, P2) on a spherical main frame (8d) mounted on pipe end support (4) or (8).

6. Apparatus claimed in Claim 4 characterized in that pipe end (P2) is supported and guided with a spherical mandrel (81) or a set of supporting rollers (81a) which contacts pipe end (P2) at a circumference included in the plane that includes the point of intersection of the three axes and is perpendicular to the center axis of the swing table and further it is chucked with a magnet chuck (85) or the like in order to allow pipe end (P2) be adjustable a little at the same time.

7. Apparatus claimed in Claim 5 characterized in that turning point (9) for marking or cutting and finishing of pipe end (P1) or (P2) is mounted on pipe end support (4) or (8).

**Patentansprüche**

1. Vorrichtung zur Maßhaltigkeitsprüfung eines geformten Rohrs oder zur Markierung oder zum Schneiden und Fertigstellen beider Enden (P1, P2) des genannten Rohrs, umfassend einen Grundrahmen (1), der so lang ist, daß er sich über die Diagonallänge des zu prüfenden Rohrs erstreckt, der eine horizontale oder im wesentlichen horizontale Grundebene als Bezugsebene für ein Koordinatensystem bildet und der mit einem Halter (4) für das horizontale Rohrende und einem Halter (8) für das zweite Rohrende ausgestattet ist, gekennzeichnet durch einen ersten Drehtisch (3) und einen zweiten Drehtisch (5), die um vertikal zu der Ebene des genannten Grundrahmens (1) verlaufende Achsen drehbar sind, welcher erste Drehtisch (3) auf einem Gleittisch (2) angebracht ist, der längs der horizontalen Grundebene (1a) des Grundrahmens (1) gegenüber dem genannten zweiten Drehtisch (5) bewegbar ist, wobei der genannte Halter (4) für das horizontale Rohrende auf dem genannten ersten Drehtisch (3) so angeordnet ist, daß seine horizontale Achse die vertikale Achse des genannten Drehtischs (3) in einer speziellen Höhe (h) schneidet, und wobei der genannte Halter (8) für das zweite Rohrende auf einem Schwenktisch (7) angebracht ist, der um eine Achse schwenkbar ist, die an dem genannten zweiten Drehtisch (5) gehalten und in einer solchen Stellung befestigt ist, daß die drei Achsen, d.h. die Achse des Halters (8) des zweiten Rohrendes, die Achse des Schwenktischs (7) und die Achse des zweiten Drehtischs (5), sich in der gleichen Höhe (h) schneiden wie bei dem genannten Halter (4) für das horizontale Rohrende.

2. Vorrichtung nach Anspruch 1, dadurch gekennzeichnet, daß der genannte Halter (4) so ausgebildet ist, daß seine Achse, trotz Veränderung oder Verstellung seiner Auflageplatten (41 bis 43) oder Stützrollen (41a, 42a) entsprechend dem Außendruchmesser der zu prüfenden geformten Rohrs, horizontal und genau in einer Höhe (h) Stellung verläuft.

3. Vorrichtung nach Anspruch 1 oder 2, dadurch gekennzeichnet, daß die Oberseite des Halters (4) für das horizontale Rohrende offen ist oder in Offen- und Geschlossenstellung zu bringen ist, so daß das horizontale Rohrende (P1) leicht eingesetzt und herausgenommen werden kann.

4. Vorrichtung nach Anspruch 1, dadurch gekennzeichnet, daß der Halter (8) für das zweite Rohrende so ausgebildet ist, daß eine geringe zusätzliche Neigung des Rohrendes (P2) gegenüber dem Schwenktisch (7) möglich ist, während er drei Achsen aufweist, und zwar die Achse des Rohrendes (P2), die Schwenkachse (6b) des Schwenktischs (7) und die vertikale Achse des Drehtischs (5), die sich in einem Punkt genau in der Höhe (h) des Halters (4) für das horizontale Rohrende schneiden und eine geringe Bewegung des Rohrendes (P2) durch den Halter (8) für das Rohrende in optimale Stellung erlauben.

5. Vorrichtung nach Anspruch 1, dadurch gekennzeichnet daß ein Rohrende (P1) oder (P2) von einer Anzahl dehnbarer Teile (8g) gehalten wird, die zum Dehnen von einem Gleitdorn (8f) angestoßen werden, der durch eine Führungsbüchse (8e) schiebbar ist, die koaxial zu einem Rohrende (P1, P2) auf einem kugelförmigen Hauptrahmen (8d) befestigt ist, der auf dem Halter (4) oder (8) für ein Rohrende angeordnet ist.

6. Vorrichtung nach Anspruch 4, dadurch gekennzeichnet daß das Rohrende (P2) gehalten und geführt wird mit einem sphärischen Dorn (81) oder einer Gruppe von Stützrollen (81a), die das Rohrende (P2) an der Umfangslinie berührt, die in der Ebene liegt, die den Schnittpunkt der drei Achsen enthält und senkrecht zu der Mittelachse des Schwenktischs steht, und ferner eingespannt ist durch eine Magneteinspannung (85) oder dergleichen, damit das Rohrende (P2) gleichzeitig ein wenig verstellbar ist.

7. Vorrichtung nach Anspruch 5, dadurch gekennzeichnet, daß eine Drehvorrichtung (9) zum Markieren oder Schneiden und Fertigstellen des Rohrendes (P1) oder (P2) an dem Halter (4) oder (8) angebracht ist.

**Revendications**

1. Appareil pour l'inspection dimensionelle d'un serpentin ou pour le marquage, ou pour le coupage et finissage de ses deux fins (P1, P2), ledit appareil comprenant un cadre de base (1) qui est suffisamment long pour couvrir la longueur diagonale du serpentin à inspecter, sur laquelle est placé un plan de base horizontal ou substantiellement horizontal en tant que plan de référance d'un système de coordonnées, équipé d'un appui pour l'extrémité horizontale (4) du serpentin et d'un appui pour la seconde extrémité (8) du serpentin, caractérisé par un premier plateau rotatif (3) et un second plateau rotatif (5), tournant autour d'axes verticaux par rapport au plan dudit cadre de base (1), le premier plateau tournant (3) étant monté sur un plateau mobile (2) pouvant se déplacer le long du plan (1a) de base horizontal sur le cadre de base (1) par rapport audit second plateau rotatif (5), ledit appui de l'extrémité horizontale (4) du serpentin étant monté sur ledit premier plateau rotatif (3) de sorte que son axe horizontal forme une intersection avec l'axe vertical dudit plateau rotatif (3) à une hauteur déterminée (h), ledit appui (8) pour la seconde extrémité du serpentin étant monté sur un plateau basculant (7) qui peut être pivoté autour d'un axe qui est appuyé et fixé sur ledit second plateau rotatif (5) dans une position telle que les trois axes, à savoir l'axe du second appui d'extrémité (8) du serpentin, l'axe du plateau basculant (7) et l'axe du second plateau rotatif (5) forment une intersection à la même hauteur (h) que celle dudit appui de l'extrémité horizontale (4) du serpentin.

2. Appareil selon la revendication 1, caractérisé en ce que l'appui de l'extrémité horizontale (4) du serpentin est construit de manière à garder son axe horizontalement et à une hauteur (h) et en une position appropriée malgré le changement ou l'ajustage de ses plateaux d'appui (41—43) ou rouleaux (41a, 42a) correspondant au diamètre du serpentin à inspecter.

3. Appareil selon les revendications 1 ou 2, caractérisé en ce que le côté supérieur de l'appui de l'extrémité horizontale (4) du serpentin est ouvert ou ajustable pour être ouvert et fermé de sorte que l'extrémité (P1) horizontale du serpentin peut être insérée et enlevée facilement.

4. Appareil selon la revendication 1, caractérisé en ce que le second appui (8) d'extrémité du serpentin est construit de manière à permettre un petit basculement supplémentaire de l'extrémité du serpentin (P2) par rapport au plateau basculant (7) alors que les trois axes qui sont l'axe de l'extrémité (P2) du serpentin, l'axe de basculement (6b) du plateau basculant (7) et l'axe vertical du plateau rotatif (5) qui s'entrecoupent réciproquement en un point à une hauteur appropriée (h) de l'appui de l'extrémité horizontale (4) du serpentin et permettent un mouvement restreint de l'extrémité (P2) du serpentin par le positionnement optimal de l'appui (8) de l'extrémité du serpentin.

5. Appareil selon la revendication 1, caractérisé en ce que l'extrémité du serpentin (P1 ou P2) s'appuie sur un certain nombre de pièces (8g) expansibles, poussées en expansion au moyen d'un mandrin pouvant glisser (8f) à travers un manchon de guidage (83) qui est fixé de manière coaxiale par un extrémité (P1, P2) du serpentin sur un cadre principal sphérique (8d) monté sur l'appui de l'extrémité du serpentin (4) ou (8).

6. Appareil selon la revendication 4, caractérisé en ce que l'extrémité du serpentin (P2) est appuyée et guidée par un mandrin sphérique (81) ou un ensemble de rouleaux d'appui (81a) qui sont en contact avec l'extrémité (P2) du serpentin à la circonférence décrite par le plan qui comprend le point d'intersection des trois axes et est perpendiculaire par rapport à l'axe du plateau basculant et que, par ailleurs, un mandrin magnétique (85) est monté, ou un dispositif semblable, de manière à permettre à l'extrémité (P2) du serpentin d'être un peu ajustée par la même occasion.

7. Appareil selon la revendication 5, caractérisé en ce que l'unité de rotation (9) pour marquer ou couper et finir les extrémités (P1 ou P2) du serpentin est montée sur l'appui de l'extrémité du serpentin (4) ou (8).

F I G. 1

# F I G. 2

# FIG. 3

41a

42a

Zl

41a

42a

4

# F I G. 4

4

# FIG. 5

# FIG. 6

# F I G. 7

FIG. 8

EP 0 191 878 B1

FIG. 9

EP 0 191 878 B1